# EUROPEAN PATENT APPLICATION

(11) **EP 4 573 904 A1**
(43) Date of publication of application: **25.06.2025**
(21) Application number: 23220058.4
(22) Date of filing: 22.12.2023
(51) Int. Cl.: A01N 37/44, A01N 65/03, A01P 21/00, C05F 11/10

(54) **BIOSTIMULANT COMPOSITION AND METHODS OF USE**

(71) Applicant: Acadian Seaplants Limited, Dartmouth NS B3B 1X8 (CA)
(72) Inventor: HAWKINS, Emma Louise, Worcestershire, WR14 3SZ (GB); WEIR, Jack James, Worcestershire, WR14 3SZ (GB); PRESCOTT, Frank, Worcestershire, WR14 3SZ (GB)
(74) Representative: Vossius & Partner Patentanwälte Rechtsanwälte mbB

(57) **Abstract**

The present invention relates to a plant biostimulant composition comprising:
(i) a seaweed, (ii) at least one biostimulant, (iii) at least one surfactant, and (iv) at least one co-formulant wherein said composition has a pH above about 9. Optionally, the composition further comprises at least one agriculturally acceptable carrier and/or additives, such as chelating agents and/or rheological aids. The present invention further relates to methods and uses for drench application of the plant biostimulant composition for mitigating abiotic stress or to manage crop productivity.

## Description

### Field of the invention

The present disclosure generally relates to biostimulant compositions which are useful for preventing or mitigating the effects of abiotic stress and crop productivity management in a plant and/or plant seed.

### Background of the invention

Abiotic stress is a major force in global agriculture that reduces yield relative to the genetic potential of the crop. As the global population grows, the gains realized, that are based on the exploitation of finite resources, are in jeopardy. Sustainability in agriculture is critical as humanity moves forward and the amount of arable land per capita shrinks (FAO 2023). Biostimulants are an important component of agricultural sustainability. Optimizing biostimulants through the development of next generation formulations of increasing complexity can deliver superior crop health results.

Phenylalanine is an amino acid that is responsible for the synthesis of various phenolic compounds, such as flavonoids and lignin, which are produced by the enzyme Phenylalanine ammonia-lyase (PAL) (Teixeira *et al.* 2017; Hyun *et al.* 2018). These Phenylalanine derived compounds allow for greater metabolic and enzymatic activity, which benefits stress response, growth, signalling, and ultraviolet protection in plants (Almas et al. 2021). Teixeira *et al.* (2017) observed an 165 % increase PAL enzyme activity in Phenylalanine treated soybean plants compared to the control. Marium et al. (2021) tested the foliar application of methionine and Phenylalanine on salinity stressed cucumber and found that the amino acids together improved shoot weights and essential ion uptake (K⁺, Ca²⁺, Mg²⁺) at a concentration of 25 ppm methionine and 100 ppm Phenylalanine. Foliar application of Phenylalanine alone significantly increased the count and weight of tomato fruit under no stress and 4 dS/m salt stress (Almas et al. 2021). These studies observed greatest improvements of plant growth parameters from foliar application of Phenylalanine at 100-150 ppm. The solubility of L-Phenylalanine needed to be increased to 50 g/L or greater to apply a drench product which is effective as a biostimulant. L-Phenylalanine solubility in water is normally only approx. 20-30 g/L.

Liquid biostimulants containing extract of *Ascophyllum nodosum* have been available on the global market since the mid-twentieth century (Craigie 2011). These have been shown to benefit crop production via enhanced root and shoot growth, yield, and resilience to stress (Pereira et al. 2020).

L-Phenylalanine is only partly soluble in water and susceptible to crystal growth at a concentration of up to 50 g/L or higher in a solution. Seaweed extracts are generally soluble in water but can suffer from sedimentation in a solution over time.

Sedimentation of the seaweed extract and any other components is common so there is a need in the art for good storage stability compositions to ensure that a biostimulant product is suitable for use in a commercial environment.

### Summary of the invention

It has now been found, in accordance with the present invention, that a unique system comprising a seaweed as an active ingredient, at least one biostimulant, at least one surfactant, at least one co-formulant, and a certain pH, allowed the seaweed and the additional biostimulant to solubilize in water without sedimentation, in high concentrations without losing any of their biostimulant efficacy.

This finding is highly important, since it enables the formation of an effective, stable, and compatible seaweed-based composition.

Specifically, and in fact as shown in the experimental section herein, a formulation containing a seaweed, more specifically an *Ascophyllum nodosum* extract, with an additional biostimulant, preferably L-Phenylalanine, with at least one surfactant, more preferably a dispersant, in a pH above about 9, more preferably above about 10.5. The content of the additional biostimulant (preferably the Phenylalanine) is preferably about 2 to 8 wt.-%, such as about 5 wt.-%, relative to the total weight of the formulation.

The biostimulant preferably contains or consists of one or more selected from tyrosine, aspartame, methionine, isoleucine, cysteine, glycine, glutamate and Phenylalanine, more preferably Phenylalanine, even more preferably L-Phenylalanine.

The biostimulant is preferably contained in the formulation at an amount of about 1 % to about 20 % (preferably about 1 % to about 10 %, more preferably about 2 % to about 8 %, still more preferably about 3 % to about 6 %) by weight, relative to the total weight of the composition. It is to be understood that the amount of the biostimulant is based on the dry weight of the biostimulant.

The ratio of seaweed extract (dry matter) to biostimulant is preferably in a range of (in wt/wt) about 1 to about 20, more preferably about 2 to about 15, even more preferably about 4 to about 12, still more preferably about 6 to about 11, even still more preferably about 7 to about 10, such as about 7, 8, 9 or 10, preferably 8 or 9.

The pH of the formulation is preferably 8.0 or more, more preferably 9.0 or more, even more preferably 9.5 or more, still more preferably 10.0 or more, and preferably 13.0 or less, more preferably 12.0 or less, still more preferably 11.5 or less, even still more preferably 11.0 or less.

The present invention thus provides a plant biostimulant composition comprising:
(i) a seaweed as an active ingredient,
(ii) at least one biostimulant,
(iii) at least one surfactant, and
(iv) at least one co-formulant;
wherein said composition has a pH above about 9.

In another aspect, the present invention provides a method of crop productivity management in a plant comprising applying to the plant, a seed of the plant or to a growth medium of the plant an effective amount of a plant biostimulant composition as defined above. It is to be understood that the term "or" as used herein, unless the context dictates otherwise, is an inclusive "or" not an exclusive "or". Thus, the term "applying to the plant, a seed of the plant or to a growth medium of the plant" includes the application to more than one of these, such as both the plant and the seed, both the plant and the growth medium, both the seed and the growth medium, as well as to alle three, i.e. plant, seed and growth medium.

In yet another aspect, the present invention provides a method of preventing or mitigating the effects of abiotic stress in a plant comprising applying to the plant, a seed of the plant or to a growth medium of the plant, an effective amount of a plant biostimulant composition as defined above.

In another aspect, the present invention provides a use of a composition as defined above to prevent or mitigate the effects of abiotic stress in a plant.

In still a further aspect, the present invention provides a use of a composition as defined above to manage crop productivity in a plant.

Other objects and features will be in part apparent and in part pointed out hereinafter.

### Description of the Figures

**Fig. 1** shows cell membrane stability assessment of APH-1035-A- salinity on corn.
**Fig. 2** shows Phi2 assessment of APH-1035-A - salinity on corn.
**Fig. 3** shows NPQt assessment of APH-1035-A - salinity on corn.
**Fig. 4** shows LEF assessment of APH-1035-A - salinity on corn.
**Fig. 5** shows SPAD assessment of APH-1035-A - salinity on corn.
**Fig. 6** shows shoot weight (in grams) assessment APH-1035-A - reduced irrigation on corn.
**Fig. 7** shows leaf temperature differential (° C) assessment of APH-1035-A-reduced irrigation on corn.
**Fig. 8** shows relative water content assessment of APH-1035-A - drought on soybean.
**Fig. 9** shows shoot weight (in grams) assessment of APH-1035-A - salinity on tomato.

### Detailed description of the invention

Several agricultural compositions will be provided in the present disclosure in order to convey the importance of the novel and inventive system which allows good efficacy as a biostimulant which has good storage stability properties, well dispersed particles with minimal separation, and no crystal growth in the composition. Also, to show the effects in comparison with other compositions, several comparative examples will be presented.

Surprisingly, it was found that by adjusting the pH further away from the isoelectric point of the amino acid, high solubility was achieved.

By combining L-Phenylalanine with *Ascophyllum nodosum* extract, the abiotic stress mitigation properties of both compounds can be harnessed. The diversification of active ingredients in a formulation also provides insurance against conditions where the action of one of the ingredients might be reduced. By combining L-Phenylalanine with *Ascophyllum nodosum* extract, a synergistic effect in particular regarding abiotic stress mitigation may be achieved.

Specifically, a liquid composition was prepared comprising about 95 g/L Soluble Seaweed Extract Powder (SSEP) and about 50 g/L L-Phenylalanine, that showed good efficacy as a biostimulant formulation and had good storage stability properties. The pH of said composition was adjusted to increase the solubility of L-Phenylalanine to provide a formulation which showed good efficacy in field trials. The inclusion of a dispersant and a chelating agent produced a formulation with better dispersed particles with good storage stability and minimal separation.

It was discovered, in accordance with the present invention, that an addition of a rheological modifier increased the physical stability, by reducing sedimentation and improving the distribution of particles, of said composition upon storage.

Furthermore, it was discovered, in accordance with the present invention, that an addition of a chelating agent reduced gelling and/or viscosity increase of said composition upon preparation and storage.

Interestingly, pH adjustment to a very acidic pH (below 4) could also achieve the required L-Phenylalanine solubility but would not be compatible with *alkaline* seaweed extracts. The L-Phenylalanine could be incorporated in a suspension system rather than a soluble liquid. A suspension could be prepared at more neutral pH but would still need stabilizing through particle size reduction and the addition of co-formulants.

The methods and uses provided herein generally comprise applying the composition to a plant (or part thereof) or a seed (or part thereof).

The compositions provided herein can be applied as a seed treatment or as a soil treatment applied to the area surrounding a plant, plant part, or seed.

The compositions and methods provided herein can be applied as a drench application, which is simply the application of the provided composition mixed in water on the soil near the plant's root crown.

The agricultural compositions and methods described herein can be used in connection with any species of plant and/or the seeds thereof. The compositions and methods are typically used in connection with seeds that are agronomically important. The seed can be a transgenic seed from which a transgenic plant can grow that incorporates a transgenic event that confers, for example, tolerance to a particular herbicide or combination of herbicides, increased disease resistance, enhanced tolerance to insects, drought, stress and/or enhanced yield. The seed can comprise a breeding trait, including for example, a disease tolerant breeding trait. In some instances, the seed includes at least one transgenic trait and at least one breeding trait.

The compositions and methods can be used for the treatment of any suitable seed type, including, but not limited to row crops and vegetables. For example, one or more plants or plant parts or the seeds of one or more plants can be selected from wheat, rye, barley, rice, triticale, oat, sorghum, sugarcane, beet, sugar beet or fodder beet, leguminous plants (such as lentils, peas, alfalfa or soybeans), oil plants (such as rape, oil-seed rape, canola, brassica juncea, linseed, mustard, olives, sunflowers, coconut, cocoa beans, castor oil plants, oil palms, ground nuts or soybeans), cucurbits (such as squashes, cucumber or melons), fiber plants (such as cotton, flax, hemp or jute), citrus fruit (such as oranges, lemons, grapefruits or mandarins), vegetables (such as spinach, lettuce, asparagus, cabbages, carrots, onions, tomatoes, cucurbits or paprika), lauraceous plants (such as avocados, cinnamon or camphor), energy and raw material plants (such as corn, soybean, rape, canola, oil palm, corn, tobacco, nuts, coffee, tea, bananas, vines, hop, or turf).

The compositions and methods disclosed herein can also be applied to turf grass, ornamental grass, and shrubs. The agricultural compositions are also suitable for use in the nursery, lawn and garden, floriculture and provide benefits for enhanced plant productivity, protection health, vigor and longevity.

The composition can be provided in concentrate form. Alternatively, the composition can be provided in ready-to-use form. By "ready-to-use", it is meant that the composition is provided in a form that requires no additional dilution by the user and is ready for application.

For convenience, before further description of the present disclosure, certain terms employed in the specification and examples are described here. These definitions should be read in the light of the remainder of the disclosure and understood as by a person of skill in the art. The terms used herein have the meanings recognized and known to those of skill in the art. However, for convenience and completeness, particular terms and their meanings are set forth below.

The terms "preferably" and "preferred" as used herein refer to features which are not essential for the present invention and may or may not be fulfilled, but may lead to further improvements.

As used herein the term "plant" or "crop" includes reference to whole plants, parts of plants, plant organs (e.g. leaves, stems, twigs, roots, trunks, limbs, shoots, fruits etc.), plant cells, or plant seeds. This term also encompasses plant crops such as fruits.

While in its broadest embodiments, the methods, compounds and compositions described herein may be used in the cultivation of any plant, in preferred embodiments, they may be used in the cultivation of commercially important plants, which can include, without being limited to, cereals (including maize, wheat, alfalfa, barley, rye, oat), vegetables (including pepper, tomato, lettuce, carrots, potatoes), fruits (including apricots, bananas, grapes, bean pods, corn grains, tomatoes, cucumbers, acorns and almonds), row crops (including sunflower, potato, canola, dry bean, field pea, flax, safflower, buckwheat, cotton, maize, soybeans, rapeseed oil and sugar beets).

As used herein, the term "propagation material" of the plant or crop may include all the generative parts of the plant or crop such as seeds and vegetative plant material such as cuttings and tubers, which can be used for the multiplication of the plant. This includes seeds, tubers, spores, corms, bulbs, rhizomes, sprouts basal shoots, stolons, and buds and other parts of plants, including seedlings and young plants, which are to be transplanted after germination or after emergence from soil.

As used herein the term "seaweed" preferably refers to the cold-water seaweed or brown alga (*Phaeophyceae*) of the family *Fucaceae,* belonging to the genus *Ascophyllum.* It is to be understood that the term "seaweed" refers not only to unprocessed seaweed but also to processed seaweed, such as seaweed extract. Preferably, the term "seaweed" refers to a seaweed extract.

As used herein the term "seaweed extract" preferably refers to an extract isolated from seaweed, which usually contains a wide range of active agents, and is typically in a form of a soluble liquid, a liquid concentrate, or a water-soluble powder. More preferably, seaweed processing/extraction can be made using solvents, acids, bases, enzymes or mechanical means eventually in any combination. Preferably, the processing/extraction is made by contacting the seaweed with an aqueous solution comprising an alkaline extraction agent. For the purpose of the present invention, the alkaline extraction agent is preferably a base which is preferably an inorganic base selected from: NaOH, KOH, Na₂CO₃, K₂CO₃, or any combination thereof. The concentration of the alkaline extraction agent preferably ranges from 1 % to 10 % w/w, more specifically 2 % to 5 % w/w, relative to the total weight of the aqueous solution. Preferably, the temperature of the extraction step ranges preferably from 20 °C to 165 °C and the extraction time typically ranges from 30 minutes to 18 hours at preferred pressures ranging from 1 to 6 Bar. The extraction step may be followed by a further step of separating/removing the nonsolubilized components when it is desirable using only the extract in the composition of the present invention. The removing/separating step is preferably performed by decantation, filtration or centrifugation. Alternatively, a suspension comprising both the extracted components and the non-extracted components can be used. Accordingly, the term "seaweed extract" typically refers to a liquid or solid containing or consisting of two or more, preferably five or more, more preferably ten or more, or even 50 or more compounds naturally occurring in seaweed, and, in the case of the liquid, optionally a solvent. Any amounts or contents of "seaweed extract" specified herein preferably refer to the amounts of the dry matter of the "seaweed extract", i.e. based on the "seaweed extract" excluding any solvent.

As used herein the term "liquid" preferably refers to a liquid at 25 °C and 1 atm.

Preferably, the process of preparation the seaweed extract is according to the procedure described in GB 664,989 A, in particular as set out in any of claims 1 to 5 of this document.

As used herein the term "active agents" are the agents that are present in the seaweed extract obtained by various processes of seaweed extraction. The seaweed extract may contain one or more than one active compound selected from, but not limited to polysaccharides, such as, especially, fucans; free and conjugated sugars; polyphenols; mannitol; lipids; proteins; amino acids; vitamins; betaines; sterols; glucuronic acid and mineral salts.

Preferably the seaweed extract comprises alginic acid, fucoidan and mannitol.

As used herein the term "biostimulant" is any substance or microorganism applied to plants with the aim to enhance nutrition efficiency, abiotic stress tolerance and/or crop quality traits, regardless of its nutrient content. Preferably, according to the EU Biostimulant definition from the Fertilizing Products Regulation, the CEN (The European Committee for Standardization) standards may be used in development for demonstrating efficacy. In accordance with the EU Biostimulant definition from the Fertilizing Products Regulation a "biostimulant" is a "fertilizing product whose function is to stimulate plant nutrition processes independently of the product's nutrient content with the sole aim of improving one or more of the following characteristics of the plant or the plant rhizosphere: nutrient use efficiency, tolerance to abiotic stress, quality traits, or availability of confined nutrients in the soil or rhizosphere". A plant biostimulant is preferably a substance, microorganism, or mixture thereof, that, when applied to seeds, plants, the rhizosphere, soil, or other growth media, acts to support a plant's natural nutrition processes independently of the biostimulant's nutrient content. The plant biostimulant thereby improves nutrient availability, uptake, or use efficiency, tolerance to abiotic stress, and consequent growth, development, quality or yield.

As used herein the term "nutrient" preferably refers to the chemical elements that plants require to survive and grow. They include primary nutrients (nitrogen, phosphorus and potassium), secondary nutrients (calcium, magnesium and sulfur) and micronutrients (such as boron, copper, iron, manganese, and zinc). Plants require 17 essential elements (nitrogen, phosphorus, potassium, calcium, magnesium, sulfur, boron, chlorine, iron, manganese, zinc, copper, molybdenum, and nickel) to reach their full growth potential. A mineral plant nutrient is generally an element which is essential or beneficial for plant growth and development or for the quality attributes of the plant or harvested product, of a given plant species, grown in its natural or cultivated environment. It is to be understood that the "nutrient" may also be a salt of the one or more "elements", or any other compound comprising the one or more "elements". Preferably, the "nutrient" is a salt (or salts) of the one or more "elements". In other words, the term "nutrient" preferably refers to one or more selected from nitrogen, phosphorus, potassium, calcium, magnesium, sulfur, boron, chlorine, iron, manganese, zinc, copper, molybdenum, nickel, and salts of any of these. More preferably, the term "nutrient" refers to one or more selected from salts of nitrogen, phosphorus, potassium, calcium, magnesium, sulfur, boron, chlorine, iron, manganese, zinc, copper, molybdenum, or nickel.

As used herein the term "active ingredient" is preferably the part of a substance or compound, including seaweed extract, that produces its chemical or biological effect, such as biostimulation.

As used herein the term "mitigating abiotic stress" is preferably one or more of: (i) increasing plant vigour, (ii) increasing root growth and development, (iii) increasing shoot growth and development, (iv) increasing plant growth rate, (v) increasing photosynthetic rate and capacity, or (vi) improving yield.

As used herein the term "crop productivity" is a measure of the amount of agricultural output produced for a given amount of inputs, preferably is a measure of the amount of agricultural output produced (such as crops etc.) for a given amount of inputs (such as seeds etc.), such as an index of multiple outputs divided by an index of multiple inputs (e.g., the value of all farm outputs divided by the value of all farm inputs).

Methods of identifying and measuring indicia of abiotic stress in plants are known to those of skill in the art and can include visual assessments of plant vitality, such as a reduction in the number or size of plants or parts thereof, a reduction in seed germination or emergence, or a reduction in seedling growth rates or vigour; gravimetric assessment of biomass yield, such as fresh or dry weights of shoots or roots; optical scanner-based assessments of plant parts, such as scanning of leaves or root systems and algorithmic determinations of leaf area or root lengths; physiological or biochemical assessments, such as cell membrane stability or relative leaf water content; and photosynthetic assessments of plant stress levels using reflectance or spectroscopy-based methods, such as determination of photosynthetic efficiency, linear electron flow, non-photochemical quenching, and relative chlorophyll levels.

As used herein the term "fertilizer" is selected from organic and inorganic fertilizers such as those selected from but not limited to urea, NPK, nitrogen based fertilizers, phosphate, calcium, potassium, magnesium, sulfur, copper, iron, manganese, molybdenum, zinc, nickel, cobalt, boron and their salts and derivatives.

As used herein the term "micronutrient" is selected from but not limited to iron, manganese, boron, molybdenum, zinc, chlorine, sodium, cobalt, silicon, nickel, chlorine, aluminium, vanadium, selenium and their salts and derivatives.

As used herein the term "derivative" is preferably a compound that is derived from a similar compound by a chemical reaction. More preferably, the term "derivative" refers to salts, solvates, alkyl esters, acyl esters, or alkyl ethers, wherein the alkyl and acyl preferably contain 1 to 24 carbon atoms and are preferably aliphatic. Even more preferably, the term "derivative" refers to salts and solvates.

As used herein the term "composition" includes a mixture or mixtures of the seaweed with another component, such as an additional biostimulant. In some embodiments, the composition may comprise at least one additional pesticide. In some embodiments, the composition may comprise an additional one or more co-formulants.

As used herein the term "agriculturally acceptable carrier" refers to a solvent which is known and accepted in the art for the preparation of compositions for agricultural or horticultural use.

As used herein the term "solvent" preferably refers to any substance, usually liquid, which is capable of dissolving one or several substances, thus creating a solution. The term "solvent" preferably does not refer to water.

As used herein the term "additive" refers to any substance that itself is not an active ingredient but is added to the composition. Examples of additives includes, but are not limited to, adjuvants, surfactants, emulsifiers, anti-freeze agents, anti-foam agents, and preservatives.

As used herein, the term "excipient" refers to any chemical which has no significant biostimulant activity, such as surfactant(s), solvent(s), or adjuvant(s). One or more excipients can be added to any composition disclosed herein.

As used herein, the term "surfactant" preferably refers to a surface-active agent that, when added to a liquid, reduces its surface tension, thereby increasing its spreading and wetting properties. They are usually organic compounds that have amphiphilic nature, which means that this molecule contains a hydrophilic group, and a hydrophobic group. Typically, a surfactant contains both a water-soluble component and a water-insoluble component. Preferably surfactants may function as emulsifiers, wetting agents, detergents, foaming agents, or dispersants. Non limiting examples of surfactants include dispersants such as one or more alkyl naphthalene sulfonate condensate.

As used herein, the term "condensate" preferably refers to any product which resulted from a chemical reaction combining two molecules or more into one. Preferably the condensate refers to a product obtained by a chemical reaction between two or more molecules of alkyl naphthalene sulfonate and one or more molecules of formaldehyde (typical molar ratio of 20:1 to 1.4:1, preferable molar ratio of 10:1 to 1:1, more preferable molar ratio of 5:1 to 1:1, even more preferable molar ratio of 3:1 to 1:1, such as a molar ratio of about 2:1). Preferred examples are one or more alkyl naphthalene sulfonate condensate.

The term "alkyl" as used herein, and unless explicitly specified, preferably relates to a C₁₋₂₈ aliphatic hydrocarbon group, which is preferably acyclic, more preferably a C₁₋₁₈ acyclic aliphatic hydrocarbon group, such as a C₁₋₆ acyclic aliphatic hydrocarbon group.

As used herein, the term "ester" typically refers to a compound containing the bivalent group "-C(=O)-O-" wherein the right-hand O is attached to a carbon atom (this carbon atom preferably not having any oxygen, sulfur or nitrogen directly bound to it) and the left-hand C is attached to a carbon atom. Preferably, the term "ester" refers to molecules formed when the hydrogen of the carboxyl group of an alkanoic acid, preferably an aliphatic C₁₋₆ alkanoic acid, more preferably acetic acid is replaced with an alkyl group, preferably an aliphatic C₁₋₆ alkyl group, more preferably an ethyl group. Other examples of esters include ethyl propanoate, propyl methanoate, propyl ethanoate, and methyl butanoate. Glycerides are fatty acid esters of glycerol, where the hydrogens of carboxyl groups of three alkanoic acids have been replaced and attached to the backbone of glycerol.

As used herein, the term "alkoxylated" preferably refers to a product produced by addition of one or more (preferably 10 or more) ethylene oxide, propylene oxide and/or butylene oxide such as via an alkoxylation process.

As used herein, the "dispersant" or "dispersing agent" and "emulsifier" preferably refer to different chemical compounds.

As used herein, the term "antifoam" preferably refers to a foam suppressor agent for aqueous and non-aqueous systems. Preferably to a silicone-based antifoam, typically polydimethylsiloxanes.

As used herein, the term "chelating agent" preferably refers to a chemical compound that binds to metal ions. Typical chelating agents contain two to eight carboxylic acid groups and one to eight nitrogen atoms as well as three to twenty aliphatic carbon atoms (apart from the carbon atoms in the carboxylic acid groups). Preferably the term "chelating agent" refers to an ethylenediaminetetraacetic acid (EDTA), nitrilotriacetic acid and/or *n-*hydroxyethylethylenediaminetriacetic acid (HEDTA).

As used herein, the term "rheological aid" or "rheological modifier" preferably refers to substances that alter the rheological properties of a material. Typically, they are added to formulations to increase viscosity and to control the finished product's properties and characteristics in a desired manner. Preferably the term "rheological aid" or "rheological modifier" refers to polysaccharides such as polysaccharides obtainable from natural sources such as trees, plants, and algae. Common examples include xanthan gum, carrageenan, guar gum, and alginates and any agriculturally acceptable salts thereof.

An "agriculturally acceptable salt" may be formed, e.g., by protonation of an atom carrying an electron lone pair which is susceptible to protonation, such as an amino group, with an inorganic or organic acid, or as a salt of a carboxylic acid group with a cation. Exemplary base addition salts comprise, for example: alkali metal salts such as sodium or potassium salts; alkaline earth metal salts such as calcium or magnesium salts; zinc salts; ammonium salts; aliphatic amine salts such as trimethylamine, triethylamine, dicyclohexylamine, ethanolamine, diethanolamine, triethanolamine, procaine salts, meglumine salts, ethylenediamine salts, or choline salts; aralkyl amine salts such as *N,N*-dibenzylethylenediamine salts, benzathine salts, benethamine salts; heterocyclic aromatic amine salts such as pyridine salts, picoline salts, quinoline salts or isoquinoline salts; quaternary ammonium salts such as tetramethylammonium salts, tetraethylammonium salts, benzyltrimethylammonium salts, benzyltriethylammonium salts, benzyltributylammonium salts, methyltrioctylammonium salts or tetrabutylammonium salts; and basic amino acid salts such as arginine salts, lysine salts, or histidine salts. Exemplary acid addition salts comprise, for example: mineral acid salts such as hydrochloride, hydrobromide, hydroiodide, sulfate salts, nitrate salts, phosphate salts (such as, e.g., phosphate, hydrogenphosphate, or dihydrogenphosphate salts), carbonate salts, hydrogencarbonate salts or perchlorate salts; organic acid salts such as acetate, propionate, butyrate, pentanoate, hexanoate, heptanoate, octanoate, cyclopentanepropionate, decanoate, undecanoate, oleate, stearate, lactate, maleate, oxalate, fumarate, tartrate, malate, citrate, succinate, glycolate, nicotinate, benzoate, salicylate, ascorbate, or pamoate (embonate) salts; sulfonate salts such as methanesulfonate (mesylate), ethanesulfonate (esylate), 2-hydroxyethanesulfonate (isethionate), benzenesulfonate (besylate), p-toluenesulfonate (tosylate), 2-naphthalenesulfonate (napsylate), 3-phenylsulfonate, or camphorsulfonate salts; and acidic amino acid salts such as aspartate or glutamate salts.

As used herein, the term "polysaccharides" preferably refers to long chains of carbohydrate molecules (such as 2 or more, preferably 10 or more, more preferably 20 or more, even more preferably 40 or more, and preferably 1000 or less, more preferably 500 or less monosaccharide units). The "polysaccharides" optionally contain sulfate groups, such as one, two, or three sulfate groups. Common examples include pentasaccharide repeat units, comprising glucose, mannose, and glucuronic acid in the molar ratio 2:2:1, and galactopyranose disaccharides, each of which contains zero, one, two, or three sulfate groups and any agriculturally acceptable salts thereof.

As used herein, the term "fatty acid" preferably refers to a carboxylic acid with an aliphatic chain, which can be saturated or unsaturated. Most naturally occurring fatty acids have an unbranched chain of an even number of carbon atoms (including the carbon atom of the carboxyl group), from 4 to 28. Preferably from 10 to 20. More preferably from 16 to 19.

As used herein the terms "oil" and "fat" are used interchangeably and preferably refer to any fatty acid triglycerides and/or mixtures thereof. More preferably, the term "oil" refers to fatty acid triglycerides which are liquid at 25 °C and 1 atm, whereas the term "fat" refers to fatty acid triglycerides which are solid at 25 °C and 1 atm.

As used herein the term "stable" when used in connection with a composition means that the composition is physically stable and chemically stable.

As used herein, the term "chemically stable" preferably means that no significant decomposition of the active components was observed after at least 2 weeks of storage in a sealed package at a temperature of 54 °C in a sealed container. The term "significant" in this context preferably means that less than 10 wt% (such as less than 5 wt%, more preferably less than 2 wt%, or even less than 1 wt%) of the respective components are decomposed.

As used herein, the term "physically stable" preferably means that no significant sedimentation was observed after at least 2 weeks of storage in a sealed package at a temperature of 54 °C. Stability may be assessed according to the test protocol established by the Collaborative International Pesticides Analytical Council Ltd. (CIPAC). Stability can be assessed under normal storage conditions which is after two years storage at room temperature. Stability can also be assessed under accelerated storage conditions which is after 2 weeks storage at 54 °C or after 4 weeks at 50 °C, or after 6 weeks at 45 °C or after 8 weeks at 40 °C or after 12 weeks at 35 °C or after 18 weeks at 30 °C.

As used herein, the term "BBCH" refers to Biologische Bundesanstalt, Bundessortenamt, und CHemische Industrie, is an abbreviation used in agriculture to refer to the BBCH scale, which is a system for phenological growth stages of plants. Stands for the three organizations that developed the scale. The BBCH scale provides a standardized way to describe the growth and development of various crops throughout their life cycle. It consists of a numerical code that represents specific growth stages or phenological events in plants. Each code corresponds to a particular stage of development, such as emergence, flowering, fruiting, or senescence. The BBCH scale is widely used in agricultural research, crop management, and phenological observations. It allows researchers, agronomists, and farmers to communicate and compare growth stages across different crops and regions, facilitating better timing for various agricultural practices like irrigation, fertilization, pest control, and harvest.

As used herein, the term "SPAD" refers to Soil Plant Analysis Development, is a handheld device that measures the relative chlorophyll concentration in leaves, which is an indicator of plant health and nutrient status. The SPAD meter works by shining a specific wavelength of light onto a leaf surface and measuring the light that is transmitted or reflected back. Chlorophyll absorbs light most efficiently in the red and blue regions of the spectrum, so the SPAD meter measures the amount of light absorbed by the leaf in these wavelengths. Based on the light absorption, the meter provides a numerical reading, typically referred to as the SPAD value. The SPAD value obtained from the meter can be used to estimate the chlorophyll content of the leaf and indirectly assess the plant's nutritional status. It is particularly useful for monitoring nitrogen levels in crops since chlorophyll production depends on an adequate supply of nitrogen. By measuring SPAD values in different parts of a field or at different growth stages, it is possible to make informed decisions regarding fertilizer application, nitrogen management, and overall crop health.

As used herein, the term "DAP" refers to days after application.

As used herein, the term "PAR" refers to photosynthetically active radiation and is preferably the spectral range of electromagnetic radiation from 400 to 700 nanometers. This range includes the majority of visible light.

As used herein the term "mixture" refers, but is not limited, to a combination in any physical form, e.g., blend, solution, alloy, or the like.

As used herein the term "combination" means an assemblage of agrochemicals for application either by simultaneous or contemporaneous application.

As used herein the term "simultaneous" when used in connection with application of agrochemicals means that the agrochemicals are applied in an admixture, for example, a tank mix. For simultaneous application, the combination may be the admixture or separate containers each containing an agrochemical that are combined prior to application.

As used herein the term "contemporaneous" when used in connection with application of biostimulants means that an individual biostimulant is applied separately from another biostimulant or premixture at the same time or at times sufficiently close together such that at least one benefit from combining the biostimulants is achieved. For example, if two active components are applied contemporaneously, an activity that is additive or more than additive or synergistic relative to the activity of either active component alone at the same dose is achieved.

As used herein the term "tank mix" means one or more of the components of the composition of the present invention are mixed in a spray tank at the time of spray application or prior to spray application.

As used herein the term "effective" when used in connection with an amount of the combination, mixture or composition refers to an amount of the combination, mixture or composition that achieves a beneficial level of biostimulation when applied to the locus.

As used herein the term "amount" typically refers to an amount of the component in the composition in weight per total weight of said composition.

As used herein the term "effective amount" refers to an amount of the active component that is commercially recommended for use to induce biostimulation and/or control or prevent pest. The commercially recommended amount for each active component, often specified as application rates of the commercial formulation, may be found on the label accompanying the commercial formulation. The commercially recommended application rates of the commercial formulation may vary depending on factors such as the plant species and the kind of biostimulation.

As used herein the term "ha" refers to hectare.

In the context of the present subject matter, the term "synergy" is preferably as defined by Colby S R in an article 'Calculation of the synergistic and antagonistic responses of herbicidal combinations' published in the journal Weeds 1967, 15, p 20-22, incorporated herein in its entirety. Furthermore, not contradicting to the above definition, synergy might be calculated using the 'Synergy Assessment for Plant Growth' by Independent Join Theory, Huang et al, 2021.

The term "a" or "an" as used herein includes the singular and the plural, unless specifically stated otherwise. Therefore, the terms "a", "an", or "at least one" is used interchangeably in this application.

Throughout the application, descriptions of various embodiments are described using the term "comprising" or grammatical equivalents thereof. It is to be understood that in such embodiments, the corresponding embodiments wherein the term "comprising" is replaced by "consisting essentially of "and preferably "consisting of" are implicitly also disclosed herein.

The term "about" herein specifically indicates that values up to 10 % above and up to 10 % below the indicated values are also included in the range. In addition, the endpoints of all ranges directed to the same component or property herein are inclusive of the endpoints, are independently combinable, and include all intermediate points and ranges.

It is understood that where a parameter range is provided, all integers within that range, and tenths thereof, are also provided by the invention as if the integers and tenths thereof are expressly described herein. For example, "0.1% to 70%" includes 0.1%, 0.2%, 0.3%, 0.4%, 0.5% etc. up to 70%.

All publications, patents and patent applications mentioned in this specification are herein incorporated in their entirety by reference into the specification, to the same extent as if each individual publication, patent or patent application was specifically and individually indicated to be incorporated herein by reference.

The following examples illustrate the practice of the present subject matter in some of its embodiments but should not be construed as limiting the scope of the present subject matter. Other embodiments apparent to persons of ordinary skill in the art from consideration of the specification and examples herein that fall within the spirit and scope of the appended claims are part of this invention. The specification, including the examples, is intended to be exemplary only, without limiting the scope and spirit of the invention.

Aspects and embodiments of the present invention will now be described.

In one aspect, the present invention provides a composition comprising:
(i) a seaweed (as an active ingredient),
(ii) at least one biostimulant,
(iii) at least one surfactant, and
(iv) at least one co-formulant;
wherein said composition has a pH above about 9.

The present invention also provides the composition wherein the seaweed is an active ingredient, preferably wherein the seaweed is the only active ingredient in the composition.

The present invention also provides the composition wherein the composition is stable.

The present invention also provides the composition wherein the composition is a plant biostimulant composition.

Preferably, the seaweed comprised within the composition of the present invention is brown algae.

Preferably, the algae are a member of the class *Phaeophyceae.*

More preferably, the member of the class *Phaeophyceae* is the species *Ascophyllum nodosum.*

The present invention also provides the composition wherein the seaweed is an extract obtained from said algae.

The present invention also provides the composition wherein the extract is in the form of a Soluble Seaweed Extract Powder (SSEP) or Liquid Seaweed Extract (LSE).

More preferably, the amount of said seaweed extract is from about 1 % to about 20 %, by weight, relative to the total weight of the composition.

The present invention also provides the composition wherein the amount of said seaweed extract is from about 5 % to about 10 %, by weight, relative to the total weight of the composition.

The present invention also provides the composition wherein said biostimulant is selected from an amino acid, an amino-acid betaine, a microorganism, an organic fertilizer, such as amino acid and fulvic and humic acid, and a mixture thereof.

Preferably, the biostimulant is an amino acid.

More preferable, the amino acid is L-Phenylalanine.

The present invention also provides the composition, wherein the amount of said amino acid is from about 1 % to about 20 % by weight based on dry matter, relative to the total weight of the composition.

The present invention also provides the composition, wherein said surfactant is an anionic surfactant.

Preferably, said surfactant is a sodium salt of a naphthalene sulfonate condensate.

The present invention also provides the composition, wherein the amount of said surfactant is from about 1 % to about 10 % by weight based on dry matter, relative to the total weight of the composition.

The present invention also provides the composition wherein said co-formulant an anti-foam, a preservative, an anti-freezing agent, a solvent, a carrier, an adjuvant, a rheological aid, a chelating agent, and a mixture thereof.

Preferably the co-formulant is a chelating agent.

More preferably, the chelating agent is Ethylenediaminetetraacetic acid (EDTA).

The present invention also provides the composition wherein the amount of said co formulant is from about 1 % to about 20 % by weight based on dry matter, relative to the total weight of the composition.

The present invention also provides the composition wherein the pH of said (biostimulant) composition is obtained by an addition of a base.

The present invention also provides the composition wherein said base is selected from potassium hydroxide, sodium hydroxide, sodium carbonate, potassium carbonate and a mixture thereof.

The present invention also provides the composition wherein said composition has a pH ranging from about 9 to about 12.

The present invention also provides the composition wherein the biostimulant composition further comprising an additional active ingredient.

The present invention also provides the composition wherein the additional active ingredient is selected from a pesticide, and a mixture thereof.

The present invention also provides the composition wherein said pesticide is selected from a herbicide, a fungicide, an insecticide, a nematicide, acaricide, and a mixture thereof.

The present invention also provides the composition wherein the biostimulant composition further comprising an inorganic fertilizer.

The present invention also provides the composition wherein said biostimulant is selected from an amino-acid betaine, a microorganism, an organic fertilizer, such as amino acid and fulvic and humic acid, and a mixture thereof.

The present invention also provides the composition, wherein the (plant biostimulant) composition comprises:
(i) an *Ascophyllum nodosum* seaweed extract in the form of a liquid or a solid extract;
(ii) an anionic surfactant, preferably sodium salt of naphthalene sulfonate condensate,
(iii) an amino acid, preferably L-Phenylalanine;
(iv) a chelating agent, preferably ethylenediaminetetraacetic acid (EDTA);
wherein said composition has a pH ranging from about 9 to about 12.

More preferably, said composition comprises (or is obtainable by mixing):
(i) an *Ascophyllum nodosum* seaweed extract in the form of a Soluble Seaweed Extract Powder (SSEP) or Liquid Seaweed Extract (LSE),
(ii) a sodium salt of naphthalene sulfonate condensate,
(iii) an ethylenediaminetetraacetic acid (EDTA),
(iv) water, and
(v) a base and/or a salt thereof.

The present invention also provides the composition wherein said composition comprises (or is obtainable by mixing):
(i) an *Ascophyllum nodosum* seaweed extract in the form of a Soluble Seaweed Extract Powder (SSEP) or Liquid Seaweed Extract (LSE), in an amount of from about 1 % to about 20 % by weight, relative to the total weight of the composition,
(ii) a sodium salt of naphthalene sulfonate condensate in an amount of from about 1 % to about 20 % by weight, relative to the total weight of the composition,
(iii) an ethylenediaminetetraacetic acid (EDTA) in an amount of from about 1 % to about 20 % by weight, relative to the total weight of the composition,
(iv) water, and
(v) a base and/or a salt thereof.

The present invention also provides the composition wherein said composition comprises (or is obtainable by mixing):
(i) an *Ascophyllum nodosum* seaweed extract in the form of a Soluble Seaweed Extract Powder (SSEP) or Liquid Seaweed Extract (LSE), in an amount of from about 1 % to about 20 % by weight, relative to the total weight of the composition,
(ii) a sodium salt of naphthalene sulfonate condensate in an amount of from about 1 % to about 20 % by weight, relative to the total weight of the composition,
(iii) an ethylenediaminetetraacetic acid (EDTA) in an amount of from about 1 % to about 20 % by weight, relative to the total weight of the composition,
(iv) water, and
(v) potassium hydroxide and/or a salt thereof.

The present invention also provides the composition wherein said composition comprises (or is obtainable by mixing):
(i) an *Ascophyllum nodosum* seaweed extract in the form of a Soluble Seaweed Extract Powder (SSEP) or Liquid Seaweed Extract (LSE), in an amount of from about 1 % to about 20 % by weight, relative to the total weight of the composition,
(ii) a sodium salt of naphthalene sulfonate condensate in an amount of from about 1 % to about 20 % by weight, relative to the total weight of the composition,
(iii) an ethylenediaminetetraacetic acid (EDTA) in an amount of from about 1 % to about 20 % by weight, relative to the total weight of the composition,
(iv) rheological aid,
(v) water, and
(vi) potassium hydroxide and/or a salt thereof.

A preferred exemplary composition of the present invention contains or consists of powdered seaweed extract, amino acid (preferably L-Phenylalanine), anionic surfactant (preferably alkyl naphthalene sulfonate condensate, more preferably Morwet^{®} D-425), chelating agent (preferably EDTA, more preferably Trilon^{®} BS), anti-foam (preferably ethyldimethylsiloxane emulsion, more preferably OR-10^{™}), preservative (preferably 1,2-benzisothiazol-3(2*H*)-one, more preferably Proxel^{™} GXL), a base (preferably potassium hydroxide), water, thickener (preferably xanthan gum, more preferably Kelzan^{®} AR), propylene glycol and optionally a rheological aid.

In another aspect, the present invention provides a method of crop productivity management in a plant comprising applying to the plant, a seed of the plant or to a growth medium of the plant an effective amount of the composition as described above.

In yet another aspect, the present invention provides a method of preventing or mitigating the effects of abiotic stress in a plant comprising applying to the plant, a seed of the plant or to a growth medium of the plant an effective amount of the composition as described herein.

The mitigating abiotic stress preferably comprises one or more of:
(i) increasing plant vigour,
(ii) increasing root growth and development,
(iii) increasing shoot growth and development,
(iv) increasing plant growth rate,
(v) increasing photosynthetic rate and capacity, or
(vi) improving yield.

The method preferably comprises applying to the seed of the plant an effective amount of the composition as described above.

More preferably, the method comprises applying said composition at a rate of from about 0.1 L to about 8 L per hectare. Even more preferably, said composition is applied at a rate of from about 0.5 L to about 4 L per hectare.

The present invention also provides a seed coated with the composition as described above.

In another aspect, the present invention provides a use of a composition as described above to prevent or mitigate the effects of abiotic stress or to manage crop productivity in a plant.

The present invention also provides a use of a composition as described above to prevent or mitigate the effects of abiotic stress.

The present invention also provides said use of a composition as described above to manage crop productivity in a plant.

Each aspect and/or embodiment disclosed herein is contemplated as being applicable to each of the other disclosed embodiments. Thus, all combinations of the various elements described herein are within the scope of the invention. In addition, the elements recited in composition embodiments can be used in the combination, mixture, method, use, package and process embodiments described herein and vice versa.

This invention will be better understood by reference to the Examples which follow, but those skilled in the art will readily appreciate that the specific experiments detailed are only illustrative of the invention as described more fully in the claims which follow thereafter.

The invention is illustrated by the following examples without limiting it thereby.

### Examples

The following examples are meant to illustrate the present invention. The examples are presented to exemplify the invention and are not to be considered as limiting the scope of the present invention.

The (powdered) seaweed extract was obtained from Acadian^{™} Plant health - Acadian^{™} soluble seaweed extract powder. This seaweed extract is a commercial product and available as APH-1001-00.
L-Phenylalanine sourced from Zhonglan
Proxel^{™} GXL was purchased from Lonza
OR-10^{™} was purchased from Momentive
Morwet^{®} D-425 was purchased from Nouryon
Potassium hydroxide was purchased from Scientific Laboratory Supplies
Trilon^{®} BS was purchased from BASF
Propylene Glycol was purchased from APT chemicals
Kelzan^{®} AR was purchased from CP Kelco

### Example 1: SSEP-O 96 g/L and L-Phenylalanine 50 g/L composition-APH-1035-A

| **Component** | **Function** | **Concentration % w/w** | **Concentration g/L** |
|---|---|---|---|
| Seaweed Extract | Active ingredient | 8.85 | 96.02 |
| L-Phenylalanine | biostimulant | 4.61 | 50.02 |
| Non-ionic surfactant (Morwet^{®} D-425) | dispersant | 1.00 | 10.85 |
| EDTA (Trilon^{®} BS) | chelator | 1.00 | 10.85 |
| Potassium hydroxide (pellets) | base | 2.71 | 29.40 |
| Xanthan Gum (Kelzan^{®} AR) | thickener | 0.30 | 3.26 |
| 1,2-benzisothiazol-3(2*H*)-one (Proxel^{™} GLX) | preservative | 0.10 | 1.09 |
| Propylene glycol | Anti-freeze | 4.67 | 50.67 |
| Ethyldimethylsiloxane emulsion (OR-10^{™}) | Anti-foam | 0.10 | 1.09 |
| water | water | Up to 100 | Up to 1085 |

KOH solution was prepared by adding the KOH pellets to half the water and mixed with low shear mixing until dissolved. Alternatively, a ready-to-use solution of KOH may be used. The solution was allowed to cool before using.

To a separate container, the other half of the water was added, followed by the addition of L-Phenylalanine and Trilon^{®} BS. The mixture was mixed using low shear.

Approx. 80% KOH 1M solution was slowly added to the main batch while mixing with low shear. Mixing was continued for 30 minutes.

The pH was measured and further KOH 1M solution was slowly added until pH ^{~} 10.5

Good mixing in between the addition of the KOH 1M solution and taking pH readings, was maintained.

The mixing was continued for an additional 1 hr. The solids were fully dissolved to make a clear solution.

Antifoam OR-10^{™} was added with low shear mixing.

Mixing was continued and Morwet^{®} D-425 and Seaweed Extract Powder were added slowly as a steady flow of powder. The mixture was left mixing for 1 hr, thus ensuring that solids were fully incorporated and no lumps of powder remained.

Proxel^{™} GXL was added with low shear mixing.

In a small container, Kelzan^{®} AR and Propylene Glycol were added to form a slurry, and then added to the main batch with low shear mixing.

The total composition was high sheared using a Silverson L5M-A laboratory mixer to fully homogenise.

This composition showed good storage stability properties.

### Example 2: SSEP-O 96 g/L and L-Phenylalanine 50 g/L composition-APH-1035-B

| **Component** | **Function** | **Concentration % W/W** | **Concentration g/L** |
|---|---|---|---|
| Seaweed Extract | Active ingredient | 8.85 | 96.02 |
| L-Phenylalanine | biostimulant | 4.61 | 50.02 |
| Anionic surfactant (Morwet^{®} D-425) | dispersant | 1.00 | 10.85 |
| Potassium hydroxide (pellets) | base | 2.71 | 29.40 |
| Propylene glycol | Anti-freeze | 5.00 | 54.25 |
| Ethyldimethylsiloxane emulsion (OR-10^{™}) | Anti-foam | 1.00 | 10.85 |
| Water | water | Up to 100 | Up to 1085 |

KOH solution was prepared by adding the KOH pellets to half the water and mixed with low shear mixing until dissolved. Alternatively, a ready-to-use solution of KOH may be used. The solution was allowed to cool before using.

To a separate container, water was added, followed by the addition of L-Phenylalanine. The mixture was mixed using low shear.

Approx. 80% KOH 1M solution was slowly added to the main batch while mixing with low shear. Mixing was continued for 30 minutes.

The pH was measured and further KOH 1M solution was slowly added until pH ^{~} 10.5

Good mixing in between the addition of the KOH 1M solution and taking pH readings, was maintained.

The mixing was continued for an additional 1 hr. The solids were fully dissolved to make a clear solution.

Propylene Glycol and Antifoam OR-10^{™} were added with low shear mixing.

Mixing was continued and Morwet^{®} D-425 and Seaweed Extract Powder were added slowly as a steady flow of powder. The mixture was left mixing for 1 hr ensuring solids were fully incorporated and no lumps of powder remained.

This composition showed lower storage stability.

### Example 3: SSEP-O 96 g/L and L-Phenylalanine 50 g/L composition- APH-1035-C

| **Component** | **Function** | **Concentration % w/w** | **Concentration g/L** |
|---|---|---|---|
| Seaweed Extract | Active ingredient | 8.85 | 96.02 |
| L-Phenylalanine | biostimulant | 4.61 | 50.02 |
| Anionic surfactant (Morwet^{®} D-425) | dispersant | 1.00 | 10.85 |
| EDTA (Trilon^{®} BS) | chelator | 1.00 | 10.85 |
| Potassium Hydroxide Solution 1 M | base | 38.26 | 415.12 |
| Xanthan Gum (Kelzan^{®} AR) | thickener | 0.30 | 3.26 |
| 1,2-benzisothiazol-3(2*H*)-one (Proxel^{™} GLX) | preservative | 0.10 | 1.09 |
| Propylene glycol | Anti-freeze | 4.67 | 50.67 |
| Ethyldimethylsiloxane emulsion (OR-10^{™}) | Anti-foam | 0.10 | 1.09 |
| water | water | Up to 100 | Up to 1085 |

To a container, water was added, followed by the addition of L-Phenylalanine and Trilon^{®} BS. The mixture was mixed using low shear.

Potassium Hydroxide Solution 1 M was slowly added while mixing with low shear. Mixing was continued for 30 minutes.

The pH was measured to be ^{~}10.5.

The mixing was continued for an additional 1 hr. The solids were fully dissolved to make a clear solution.

Antifoam OR-10^{™} was added with low shear mixing.

Mixing was continued and Morwet^{®} D-425 and Seaweed Extract Powder were added slowly as a steady flow of powder. The mixture was left mixing for 1 hr ensuring solids were fully incorporated and no lumps of powder remained.

Proxel^{™} GXL was added with low shear mixing.

In a small container, Kelzan^{®} AR and Propylene Glycol were mixed to form a slurry, and then added to the main batch with low shear mixing.

The total composition was high sheared using a Silverson L5M-A laboratory mixer to fully homogenise.

This composition showed good storage stability properties.

Storage stability data are presented in Tables 1 to 3. The measurements and experiment conditions are as follows:

### Appearance

The appearance was assessed by visually inspecting each sample for any types of separation. Sediment was checked by dipping a spatula or rod into the sample then pouring the liquid to observe flowability or sediment left in the bottle.

### pH

The pH was measured using a HANNA HI5521 Benchtop pH Meter equipped with a HI 7662 temperature probe for temperature compensation. The pH was measured by dipping the electrode tip into the sample until a stable reading was obtained.

### Microscopic Appearance

An Olympus BX53 light microscope with a built-in camera was used to record microscope images. Samples were dropped onto a glass slide using pipettes and covered with a glass coverslip. Samples were observed using a 20X objective lens. Images were then taken using the cellSens imaging software.

### Viscosity

Viscosity was measured on a Brookfield DVNext-LV Cone/Plate Rheometer using a CPA-52Z Spindle. A sample volume of 0.5 mL was used for each measurement with the temperature maintained at 20.0 °C.

### Dilution Stability

To a 100 cm³ ASTM glass graduated centrifuge tube, 99 mL of WHO standard water was added using a measuring cylinder. A 1 mL sample of test product was transferred using a 1 mL syringe into the water. The centrifuge tube was sealed with a rubber bung and inverted 10 times. Any separation was noted at regular time intervals up to 24 hr.

**Table 1: storage stability data for the composition of Example 1**

| **Interval** | **Initial** | **2 Weeks at 54°C** | **1 Month at 50°C** | **3 Months at 40°C** | **6 Months at 25°C** | **12 Months at 25°C** |
|---|---|---|---|---|---|---|
| Appearance | Dark brown flowable liquid. | Dark brown flowable liquid. | Dark brown flowable liquid. | Dark brown flowable liquid. | Dark brown flowable liquid. | Dark brown flowable liquid. |
| Sediment | None | <5% very soft-pack sediment. | <5% very soft-pack sediment. | Trace soft-pack sediment. | <5% very soft-pack sediment. | <5% very soft-pack sediment. |
| pH | 10.5 | 10.5 | 10.4 | 10.5 | 10.7 | 10.7 |
| Microscope Appearance | Dispersed particles <10µm | Some flocs <50µm | Some flocs <50µm | Some flocs <50µm | Some flocs 20-30µm | Some flocs 20-30µm |
| Viscosity (cP) 2 mins at 60 rpm | 46 | 53 | 54 | 55 | 51 | 53 |
| Temp. 20.0°C | | | | | | |
| Spindle: CPA-52Z | | | | | | |
| Dilution Stability (1% v/v in 342 ppm Water) | Trace | 0.05 | 0.05 | < 0.05 | < 0.05 | < 0.05 |
| Sediment (ml) after 24 hours | | | | | | |

**Table 2: storage stability data for the composition of Example 2**

| **Interval** | **Initial** | **2 Weeks at 54°C** | **1 Month at 50°C** | **3 Months at 40°C** | **6 Months at 25°C** | **12 Months at 25°C** |
|---|---|---|---|---|---|---|
| Appearance | Dark brown flowable liquid. | Dark brown flowable liquid. | Dark brown flowable liquid. | Dark brown flowable liquid. | Dark brown flowable liquid. | Dark brown flowable liquid. |
| Sediment | ^{~}10% soft-pack sediment. | ^{~}20% (structured) soft-pack sediment. | 10-15% soft-pack sediment. | 10-15% soft-pack / viscous sediment. | ^{~}15% soft-pack / viscous sediment. | ^{~}10% soft-pack / viscous sediment. |
| pH | 10.6 | 10.4 | 10.4 | 10.4 | 10.4 | 10.6 |
| Microscope Appearance | Dispersed particles <10µm) | Some flocs ^{~}50µm | Large, flocculated regions | Mostly flocs >>100µm | Mostly flocs >>100µm | Mostly flocs >>100µm |
| Viscosity (cP) 2 mins at 60 rpm | 9 | 27 | 28 | 25 | 19 | 28 |
| Temp. 20.0°C | | | | | | |
| Spindle: CPA-52Z | | | | | | |
| Dilution Stability (1% v/v in 342 ppm Water) | 0.10 | 0.50 | 1.40 | 1.60 | 0.70 | 1.00 |
| Sediment (ml) after 24 hours | | | | | | |

**Table 3: storage stability data for the composition of Example 3**

| **Interval** | **Initial** | **2 Week at 54°C** | **1 Month at 50°C** |
|---|---|---|---|
| Appearance | Dark brown flowable liquid. | Dark brown flowable liquid. | Dark brown flowable liquid. |
| Sediment | None | ^{~}5% very soft-pack sediment. | ^{~}10% (structured) very soft-pack sediment. |
| pH | 10.6 | 10.7 | 10.6 |
| Microscope Appearance | Dispersed particles and small flocs <20µm | Some flocs <50µm | Some flocs <50µm |
| Viscosity (cP) | 56 | 58 | 57 |
| 2 mins at 60 rpm | | | |
| Temp. 20.0°C | | | |
| Spindle: CPA-52Z | | | |
| Dilution Stability (1% v/v in 342 ppm Water) | Trace | 0.10 | 0.05 |
| Sediment (ml) after 24 hours | | | |

Microscope appearance is an estimation of the size based on the scale bar in the microscope image, and is an approximate estimation.

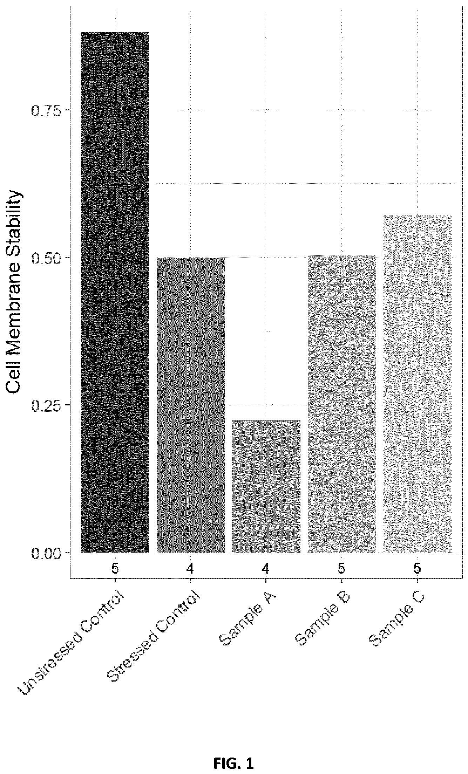

The results of biological experiments of compositions of Example 1 (APH-1035-A) are presented in Figures 1 to 9.

These experiments were performed in controlled environments under the following conditions:
Salinity stressed corn, reduced irrigation stressed corn, and salinity stressed tomato: Heated greenhouse with natural solar exposure and supplemental lighting. Temperature, humidity, and light were considered and controls were adjusted through an automated feedback network to avoid rapid fluctuations in vapor pressure deficit (VPD) and kept VPD at approximately 1-1.2 kPa (daytime) and 0.5 - 0.7 kPa (night).
- Approximate temperatures 26 °C (day) and 19.5 °C (night)
- Supplemental LED lighting set at PAR of 165µmol/m²/s with a target daily accumulated PAR of 6 mol/m², not to exceed a 16 hour day length

Drought stressed soybean: Controlled environment chamber set at 27 °C constant, 16/8 h light/dark, daytime PAR approximately 440 µmol/m²/s, 60 % relative humidity, 600ppm CO₂.

### Results:

Sample A is (powdered) seaweed extract obtained from Acadian^{™} Plant health - Acadian^{™} soluble seaweed extract powder. This seaweed extract is a commercial product and available as APH-1001-00. The *Ascophyllum nodosum* extract is of the amount 0.5 g/L. Applied at the rate of 0.5 g/L.

Sample B is L-Phenylalanine sourced from Zhonglan. The L-Phenylalanine is of the amount 0.25 g/L. Applied at the rate of 0.25 g/L.

Sample C is of Example 1, described above. The *Ascophyllun nodosum* extract is of the amount 0.5 g/L and the L-Phenylalanine is of the amount 0.25 g/L, by using the product of Sample C at the rate of 5 mL/L.

Sample D is a combination (e.g. tank-mix) of Sample A and Sample B. The *Ascophyllun nodosum* extract is of the amount 0.5 g/L and the L-Phenylalanine is of the amount 0.25 g/L.

Samples A, B and D are comparative examples to Sample C.

The number of replicates is indicated at the bottom of each bar in the figures.

For cell membrane stability assessment of APH-1035-A - salinity stress on corn, Figure 1 demonstrates that an application of APH-1035-A increased cell membrane stability of stressed corn plants, showing said increase of the stressed corn plants over the stressed control and over the individual actives of said formulation. Synergy assessment: for tank mix (not formulation) R=1.93.

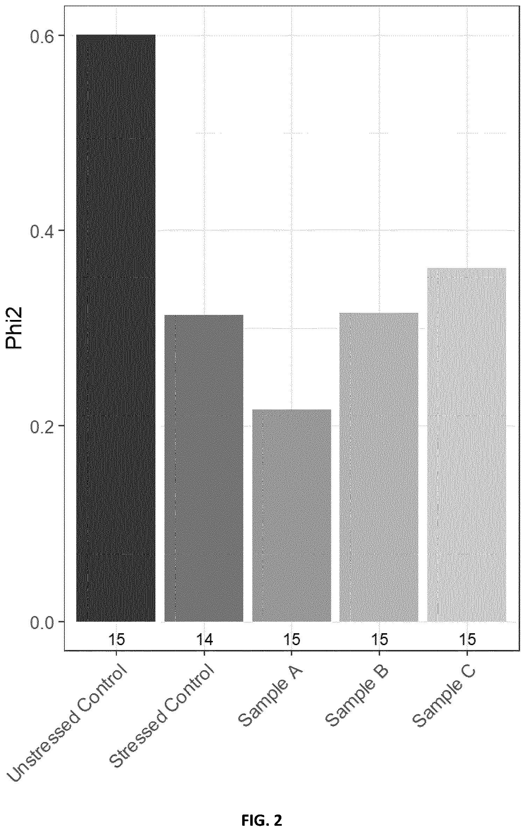

For Phi2 assessment of APH-1035-A - salinity stress on corn, Figure 2 demonstrates that an application of APH-1035-A increased Phi2 levels of stressed corn plants, showing said increase of the stressed corn plants over the stressed control and over the individual actives of said formulation. Synergy assessment: for tank mix (not formulation) R=1.29.

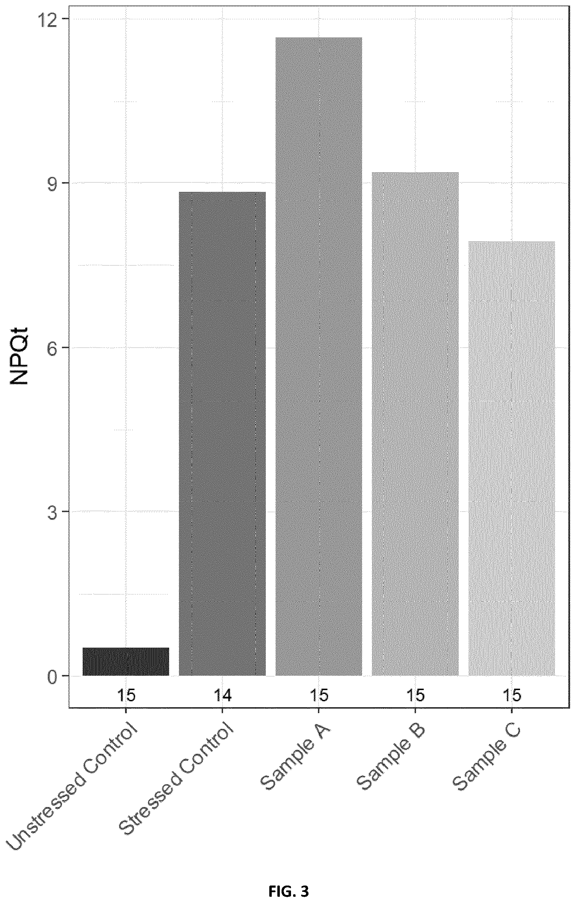

For NPQt assessment of APH-1035-A - salinity stress on corn, Figure 3 demonstrates that an application of APH-1035-A decreased NPQt levels of stressed corn plants, showing said decrease of the stressed corn plants over the stressed control and over the individual actives of said formulation.

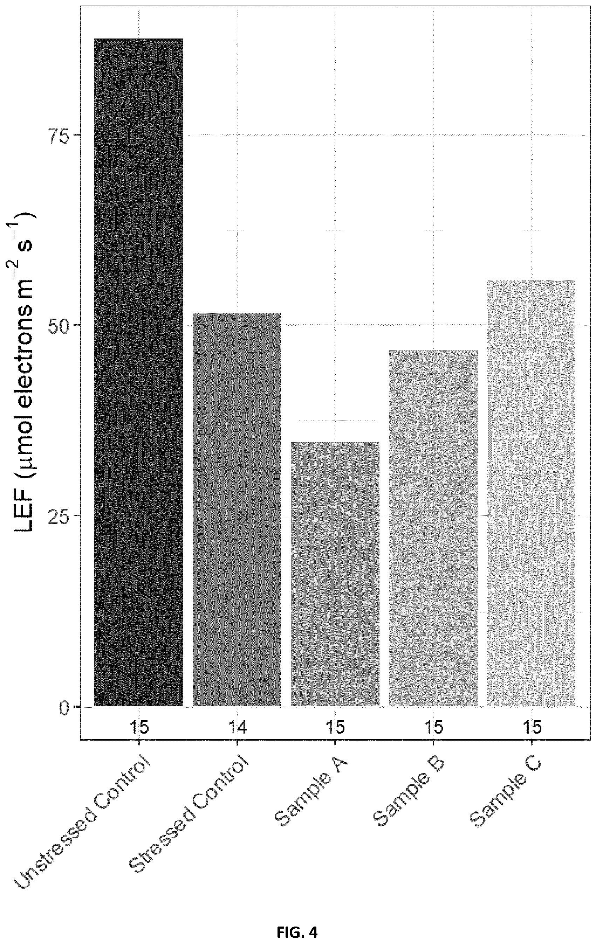

For LEF assessment of APH-1035-A - salinity stress on corn, Figure 4 demonstrates that an application of APH-1035-A increased LEF levels of stressed corn plants, showing said increase of the stressed corn plants over the stressed control and over the individual actives of said formulation. Synergy assessment: for tank mix (not formulation) R=1.41.

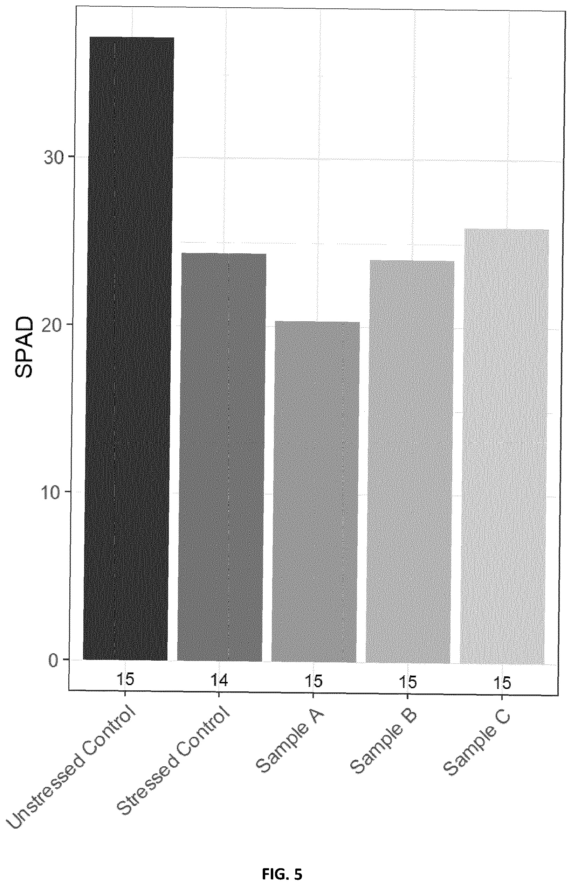

For SPAD assessment of APH-1035-A - salinity stress on corn, Figure 5 demonstrates that an application of APH-1035-A increased SPAD levels of stressed corn plants, showing said increase of the stressed corn plants over the stressed control and over the individual actives of said formulation. Synergy assessment: for tank mix (not formulation) R=1.17.

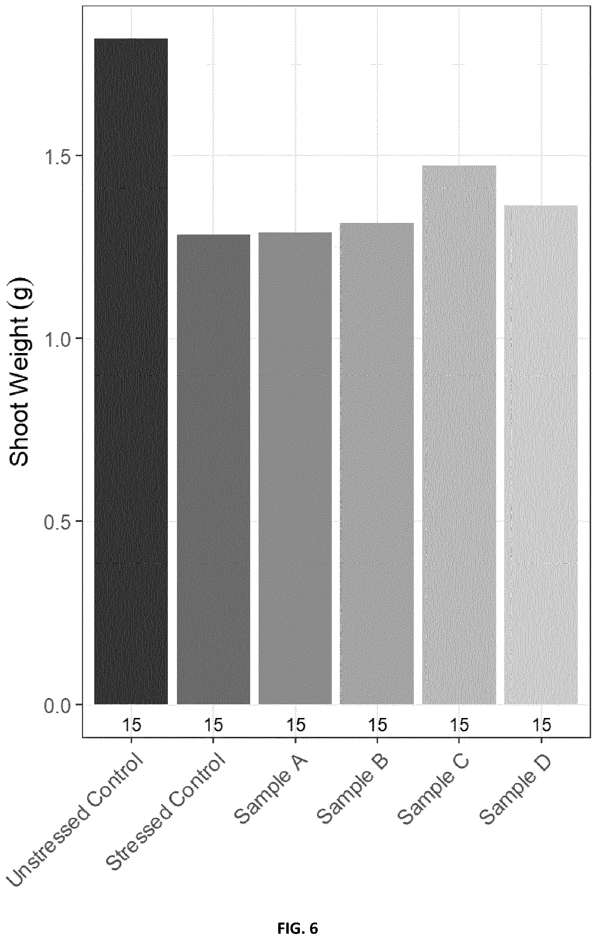

For SFW assessment of APH-1035-A - reduced irrigation stress assessment on corn, Figure 6 demonstrates that an application of APH-1035-A increased the shoot weight (in grams) of fresh shoots by foliar application of stressed corn plants, showing said increase of the stressed corn plants over the stressed control and over the individual actives of said formulation. Synergy assessment: for tank mix (not formulation) R=1.03.

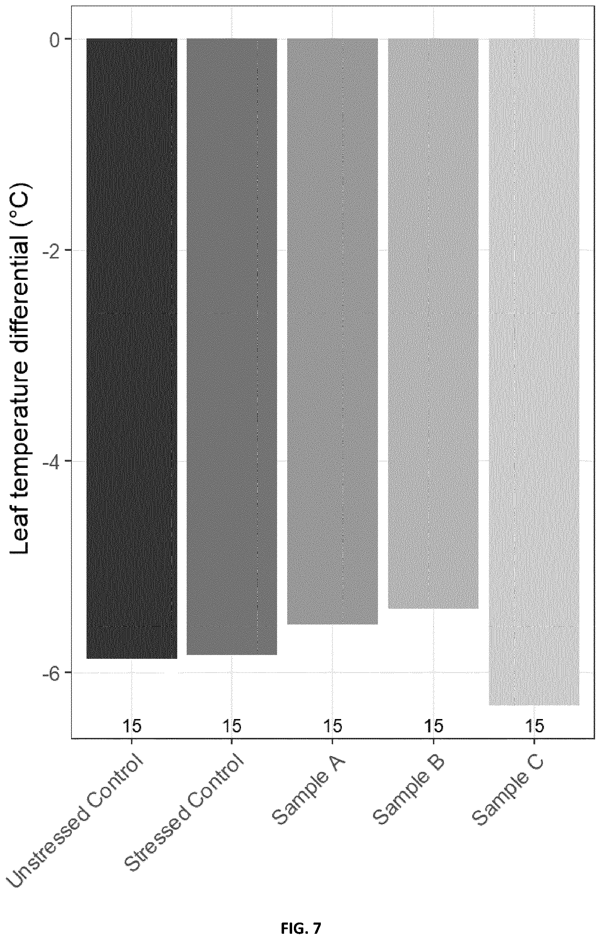

For leaf temperature differential assessment of APH-1035-A - reduced irrigation stress assessment on corn plants, Figure 7 demonstrates that an application of APH-1035-A decreased the temperature (in ° C) of the stressed corn plant, showing said decrease of the stressed corn plants over the stressed control and over the individual actives of said formulation. Also, the formulation showed even better results as to the unstressed plants. Synergy assessment: for tank mix (not formulation) R=1.01.

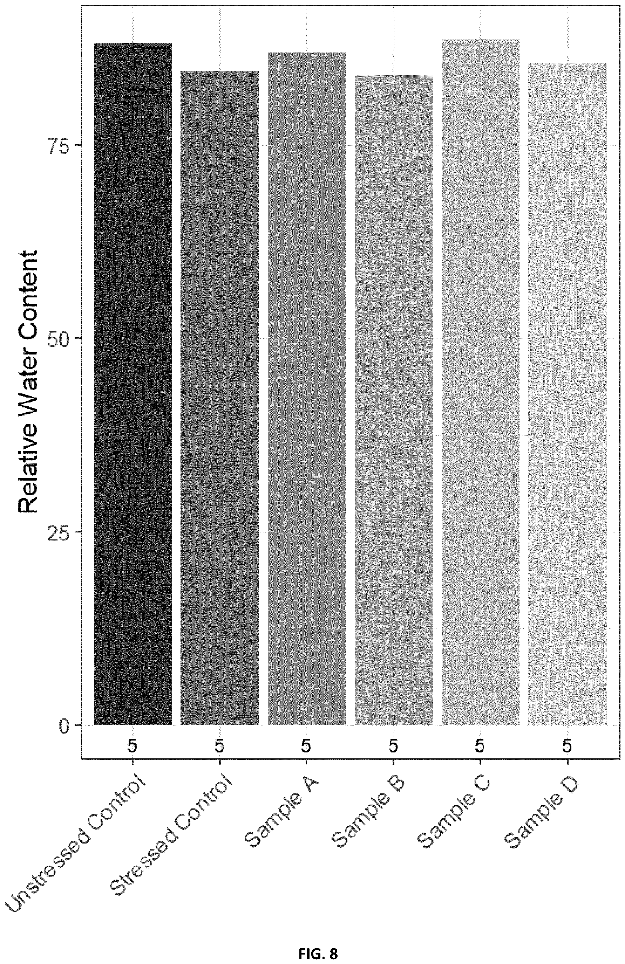

For RWC assessment of APH-1035-A - drought stress assessment on soybean, Figure 8 demonstrates that an application of APH-1035-A increased the relative water content of stressed soybean plants, showing said increase of the stressed soybean plants over the stressed control, and over the individual actives of said formulation. Also, the formulation showed better results compared to the tank-mix.

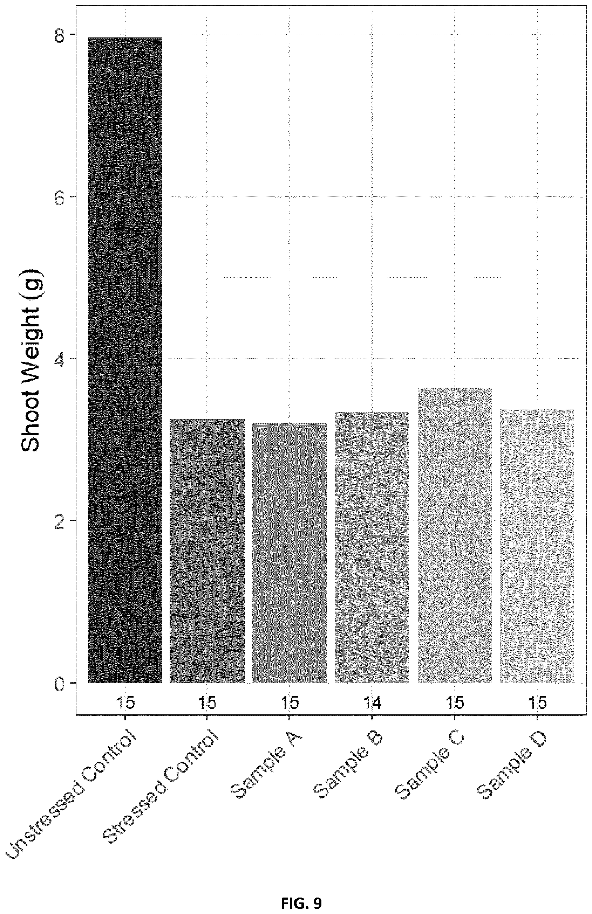

For SFW assessment of APH-1035-A - salinity stress assessment on tomato, Figure 9 demonstrates that an application of APH-1035-A increased the shoot weight (in grams) of stressed tomato plants, showing said increase of the stressed tomato plants over the stressed control, and over the individual actives of said formulation. Also, the formulation showed better results compared to the tank-mix. Synergy assessment: for tank mix (not formulation) R=1.03.

## Claims

1. A composition comprising:
(i) a seaweed,
(ii) at least one biostimulant,
(iii) at least one surfactant, and
(iv) at least one co-formulant;
wherein said composition has a pH above about 9.

2. The composition according to claim 1, wherein the seaweed is a brown algae.

3. The composition according to claim 2, wherein said algae is a member of the class *Phaeophyceae.*

4. The composition according to claim 3, wherein said member of the class *Phaeophyceae* is the species *Ascophyllum nodosum.*

5. The composition according to any one of claims 1-4, wherein the seaweed is seaweed or seaweed extract, preferably seaweed extract, wherein the amount of said seaweed extract is preferably from about 1 % to about 20 % by weight based on dry matter, relative to the total weight of the composition.

6. The composition according to any one of claims 1-5, wherein said biostimulant is selected from an amino-acid, an amino-acid betaine, a microorganism, an organic fertilizer (such as amino acid and fulvic and humic acid), and a mixture thereof, preferably wherein said biostimulant is an amino acid, wherein the amount of said amino acid is preferably from about 1 % to about 20 % by weight based on dry matter, relative to the total weight of the composition.

7. The composition according to claim 6, wherein said biostimulant is Phenylalanine, preferably L-Phenylalanine.

8. The composition according to any one of claims 1-7, wherein said surfactant is an anionic surfactant, preferably a sodium salt of a naphthalene sulfonate condensate, wherein the amount of said surfactant is preferably from about 1 % to about 10 % by weight based on dry matter, relative to the total weight of the composition.

9. The composition according to any one of claims 1-8, wherein said co-formulant is selected from an anti-foam, a preservative, an anti-freezing agent, a solvent, a carrier, an adjuvant, a rheological aid, a chelating agent, and a mixture thereof, preferably a chelating agent, wherein the amount of said co-formulant is preferably from about 1 % to about 20 % by weight based on dry matter, relative to the total weight of the composition.

10. The composition according to any of claims 1-9, comprising:
(i) an *Ascophyllum nodosum* seaweed extract in the form of a liquid or a solid extract;
(ii) an anionic surfactant, preferably a sodium salt of a naphthalene sulfonate condensate,
(iii) an amino acid, preferably L-Phenylalanine; and
(iv) a chelating agent, preferably ethylenediaminetetraacetic acid (EDTA);
wherein said composition has a pH ranging from about 9 to about 12.

11. A method of crop productivity management in a plant comprising applying to the plant, to a seed of the plant or to a growth medium of the plant an effective amount of the composition according to any of claims 1 to 10.

12. A method of preventing or mitigating the effects of abiotic stress in a plant comprising applying to the plant, a seed of the plant or to a growth medium of the plant an effective amount of the composition according to any of claims 1 to 10.

13. The method according to claim 11 or 12, wherein said composition is applied at a rate of from about 0.1 L to about 8 L per hectare.

14. Use of a composition according to any one of claims 1 to 10 in crop productivity management and/or to prevent or mitigate the effects of abiotic stress in a plant.

## Amended claims

### Amended claims in accordance with Rule 137(2) EPC.

1. A composition comprising:
(i) a seaweed, selected from unprocessed seaweed and processed seaweed, such as seaweed extract,
(ii) at least one biostimulant,
(iii) at least one surfactant, and
(iv) at least one co-formulant;
wherein said composition has a pH above 9.

2. The composition according to claim 1, wherein the seaweed is a brown algae.

3. The composition according to claim 1 or 2, wherein said member of the class *Phaeophyceae* is the species *Ascophyllum nodosum.*

4. The composition according to any one of claims 1-3, wherein the seaweed is seaweed or seaweed extract, preferably seaweed extract, wherein the amount of said seaweed extract is preferably from about 1 % to about 20 % by weight based on dry matter of the seaweed extract, relative to the total weight of the composition.

5. The composition according to any one of claims 1-4, wherein said biostimulant is selected from an amino-acid, an amino-acid betaine, a microorganism, an organic fertilizer (such as amino acid and fulvic and humic acid), and a mixture thereof, preferably wherein said biostimulant is an amino acid, wherein the amount of said amino acid is preferably from about 1 % to about 20 % by weight based on dry matter, relative to the total weight of the composition.

6. The composition according to claim 5, wherein said biostimulant is Phenylalanine, preferably L-Phenylalanine.

7. The composition according to any one of claims 1-6, wherein said surfactant is an anionic surfactant, preferably a sodium salt of a naphthalene sulfonate condensate, wherein the amount of said surfactant is preferably from about 1 % to about 10 % by weight based on dry matter, relative to the total weight of the composition.

8. The composition according to any one of claims 1-7, wherein said co-formulant is selected from an anti-foam, a preservative, an anti-freezing agent, a solvent, a carrier, an adjuvant, a rheological aid, a chelating agent, and a mixture thereof, preferably a chelating agent, wherein the amount of said co-formulant is preferably from about 1 % to about 20 % by weight based on dry matter, relative to the total weight of the composition.

9. The composition according to any of claims 1-8, comprising:
(i) an *Ascophyllum nodosum* seaweed extract in the form of a liquid or a solid extract;
(ii) an anionic surfactant, preferably a sodium salt of a naphthalene sulfonate condensate,
(iii) an amino acid, preferably L-Phenylalanine; and
(iv) a chelating agent, preferably ethylenediaminetetraacetic acid (EDTA);
wherein said composition has a pH ranging from above 9 to about 12.

10. A method of crop productivity management in a plant comprising applying to the plant, to a seed of the plant or to a growth medium of the plant an effective amount of the composition according to any of claims 1 to 9.

11. A method of preventing or mitigating the effects of abiotic stress in a plant comprising applying to the plant, a seed of the plant or to a growth medium of the plant an effective amount of the composition according to any of claims 1 to 9.

12. Use of a composition according to any one of claims 1 to 9 in crop productivity management and/or to prevent or mitigate the effects of abiotic stress in a plant.
